# NEUE EUROPÄISCHE PATENTSCHRIFT

(11) **EP 2 554 352 B2**
(45) Veröffentlichungstag und Bekanntmachung des Hinweises auf die Entscheidung über den Einspruch: **19.08.2020**
(45) Hinweis auf die Patenterteilung: 01.03.2017
(21) Anmeldenummer: 12179243.6
(22) Anmeldetag: 03.08.2012
(51) Int. Cl.: B29C 45/14

(54) **VERFAHREN ZUR HERSTELLUNG EINES HINTERSPRITZTEN FORMTEILS**
Method for producing a back-moulded part
Procédé de fabrication d'une pièce de formage surmoulée

(30) Priorität: 05.08.2011 AT 11352011; 09.08.2011 AT 11452011
(43) Veröffentlichungstag der Anmeldung: 06.02.2013
(73) Patentinhaber: Georg Kaufmann Formenbau AG, 5453 Busslingen (CH)
(72) Erfinder: Kaufmann, Georg, 5442 Fislisbach (CH)
(74) Vertreter: Laminger, Norbert

(56) Entgegenhaltungen:
- DE-A1- 4 127 241
- DE-A1- 4 408 446
- JP-A- 8 156 015
- JP-A- 11 077 739
- JP-A- H04 255 312
- US-A1- 2003 215 614
- US-A1- 2008 197 670
- US-A1- 2008 237 925

## Beschreibung

Die Erfindung betrifft ein Verfahren zum Herstellen eines Formteils mittels eines Werkzeuges, welches eine Matrize und einem Formkern aufweist, wobei in einem ersten Schritt ein zu hinter spritzender oder hinter schäumender Einlegeteil in die Matrize eingelegt wird, sodass eine Kante des Einlegeteils über einen Rand der Matrize oder eines matrizenseitigen Schiebers oder Rahmens übersteht, und in einem zweiten Schritt das Werkzeug geschlossen wird, sodass zwischen dem Formkern und der Matrize eine Kavität gebildet wird, wobei in einem dritten Schritt die Kavität mit einem Spritzgussmaterial oder einem Schaumstoff aufgefüllt wird.

Weiters betrifft die Erfindung einen Formteil mit einem hinter spritzten oder hinter schäumten Einlegeteil.

Unter dem Begriff "Einleger", werden in diesem Dokument beliebige in die Matrize einlegbare und hinter spritzbare Materialien, insbesondere Dekormaterialien, Stoffe, Folien, etc. verstanden. Unter dem Begriff "Hinterspritzen" wird in diesem Dokument auch Quellflussprägen und Strangpressen verstanden.

Ein Verfahren der eingangs genannten Art ist beispielsweise aus der EP 1 144 177 B1 oder US 2008/237925 A bekannt geworden. Bei dem bekannten Verfahren kommt ein Spritzgusswerkzeug zum Einsatz, welches eine Matrize und einen Formkern aufweist, die einen in weiterer Folge als Kavität bezeichneten Hohlraum bilden. In das Werkzeug wird ein Einleger, beispielsweise ein Dekormaterial, eingelegt, welches durch Auffüllen der Kavität mit Kunststoff hinter spritzt wird, sodass das eingelegte Material an die Kavitätswand gepresst wird. Um eine Beschädigung des Einlegers zu vermeiden wird der Kunststoff mit geringem Druck eingespritzt. Hierzu ist das Spritzgießwerkzeug zunächst noch nicht vollkommen geschlossen, sondern bleibt geringfügig geöffnet, beispielsweise 2 bis 10 mm. Um zu vermeiden, dass in dieser Position eingespritzter Kunststoff über den Randbereich der Kavität austritt, ist ein sogenannter Tauchkantenspalt vorgesehen. Das vor dem Hinterspritzen in die Matrize eingelegte Obermaterial erstreckt sich in den Tauchkantenspalt hinein und wird beim vollständigen Schließen des Spritzgießwerkzeugs, das während des Einspritzens von Kunststoff erfolgt, im Tauchkantenspalt eingeklemmt.

Das Hauptproblem beim Hinterspritzen von Einlegern zeichnet sich beim Tauchkantenspiel ab. Diese ist für die Entlüftung der Werkzeugkavität notwendig. Ist das Tauchkantenspiel zu groß, so überspritzt der Kunststoff den Einleger im Umbugbereich und verhindert oder beschädigt das nachträgliche Umbugen des Einlegers. Wird das Tauchkantenspiel zu knapp bemessen, wird durch das Einfahren des Stempels der Einleger gestaucht, sodass sich im Sichtbereich des Bauteils Falten bilden.

Nachteilig an den bekannten Ausführungsformen ist es vor allem, dass eine aufwendige Nachbearbeitung erforderlich ist, da die Einleger am Rand überstehend sind und dadurch in einem Nachbearbeitungsschritt umgebugt und befestigt oder beschnitten werden müssen. Diese Nachbearbeitung ist teuer und zeitaufwendig und fordert auch gewisse Bauteilgüten um beschädigungsfrei ausgeführt zu werden.

Es ist daher eine Aufgabe der Erfindung, die oben genannten Nachteile zu überwinden.

Diese Aufgabe wird mit einem Verfahren der eingangs genannten Art erfindungsgemäß durch die Merkmale des Patentanspruchs 1 gelöst.

Die erfindungsgemäße Lösung ermöglicht es, dass beim Hinterspritzen von Einlegern keine Nachbearbeitungsschritte an den resultierenden Bauteilen durchzuführen sind. Da die überstehende Dekorfolie direkt im Werkzeug umgebugt und befestigt wird. Durch das Umbiegen mittels des Formkerns kommt die Kante des Einlegeteils bei Schließen des Spritzgießwerkzeuges innerhalb der Kavität zu liegen. Mit der erfindungsgemäßen Lösung ist es möglich, Umbüge beispielsweise in den Winkel von 90° und 180° direkt im Spritzgusswerkzeug durchzuführen. Auch das oben angesprochene Problem mit dem Tauchkantenspiel ist durch die Erfindung gelöst, da das Tauchkantenspiel ein bisschen grösser gewählt werden kann, denn falls der Kunststoff einige Millimeter überschießt spielt dies keine Rolle mehr, weil die Nachbearbeitung wegfällt. Ein Nebeneffekt der erfindungsgemäßen Lösung besteht auch darin, dass Folienklemmen zur Fixierung des Einlegers im Werkzeug wegfallen. Bis jetzt war es üblich, die Folie weiter über den Schieber zu ziehen und zu befestigen. Da die Folie nun abgeschnitten wird, fallen auch die Klemmen weg. Die Folie hält durch ihre Form in der Matrize.

Vorteilhafterweise wird der Einlegeteil so eingelegt, dass seine überstehende Kante einen Winkel größer als Null Grad mit einer Oberfläche der Matrize oder des matrizenseitigen Schiebers oder des matrizenseitigen Rahmens einschließt. Durch diese Maßnahme lässt sich auf einfache Weise sicherstellen, dass die Kante des Einlegeteils bei Schließen des Spritzgusswerkzeuges von dem Formteil umgebugt wird.

Als besonders vorteilhaft hat sich herausgestellt, wenn ein Einlegeteil aus einem elastischen oder plastischen Material verwendet wird. Auf diese Weise lässt sich ein Abstehen des Einlegerüberschusses über die Matrize bewerkstelligen.

Die oben genannte Aufgabe lässt sich auch mit einem Formteil der eingangs genannten Art lösen, welcher es nach dem erfindungsgemäßen Verfahren hergestellt ist.

Zum besseren Verständnis der Erfindung wird diese anhand der nachfolgenden Figuren näher erläutert.

Es zeigen jeweils in stark schematisch vereinfachter Darstellung:
Fig. 1 ein Spritzgusswerkzeug in einem geöffneten Zustand mit einem Formkörper mit einer um 90° umgebogenen Umbugkante
Fig. 2 das Spritzgusswerkzeug aus Fig. 1 mit einem Formteil mit einer um 180° umgebogenen Umbugkante und
Fig. 3 ein Detail eines erfindungsgemäßen Formteils mit in einem Spritzgusswerkzeug umgebugten Umbug.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

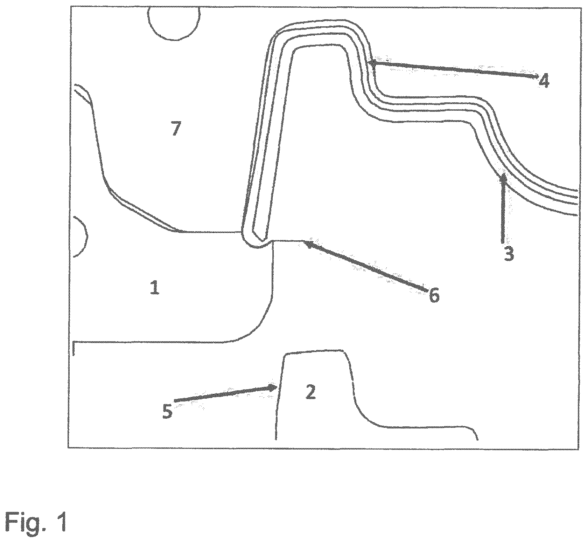

Fig. 1 zeigt einen Formteil 3 mit einer um 90° umgebogenen Umbugkante. Der Formkörper 3 wird mittels eines Spritzgusswerkzeuges, welches eine Matrize 7 und einen Formkern 2 aufweist, hergestellt. Zur Herstellung des erfindungsgemäßen Formkörpers 3 wird in einem ersten Schritt ein zu hinter spritzender oder hinter schäumender Einlegeteil 4 in die Matrize 7 eingelegt. Hierbei steht eine Kante 6 des Einlegeteils über einen Rand der Matrize oder eines matrizenseitigen Schiebers 1 oder Rahmens über. Im Folgenden wird die Kante 6 auch als Einlegerüberschuss 6 bezeichnet. Der Schieber 1 umrundet die Sichtkante und fixiert den Einlegeteil 4 so, dass der Einlegerüberschuss 6 an den Formkern 2 leicht angedrückt wird.

Um den Umbug im Werkzeug zu erleichtern, kann der Einlegeteil 4 so zugeschnitten werden das ein kleiner Einlegerüberschuss 6 über den Schieber 1 vorsteht. Bevorzugt kann der Einlegeteil 4 so beschnitten werden, dass der Einlegerüberschuss 6 von der Matrize absteht 7 und einen Winkel größer als Null Grad mit der Oberfläche der Matrize 7 einschließt.

Als vorteilhaft hat es sich erwiesen, wenn das Material des Einlegeteils 4 ein plastisches und/oder elastisches Material ist. An dieser Stelle sei jedoch darauf hingewiesen, dass als Material für den Einlegeteil 4 grundsätzlich jedes Material verwendet werden kann, welches sich für ein Hinterspritzen oder Hinterschäumen eignet.

In einem zweiten Schritt wird das Werkzeug geschlossen. Hierbei wird der Einlegerüberschuss 6 von dem Formkern 2 in Richtung der Matrize 7 umgebogen. Während der Werkzeugschliessbewegung fährt der Formkern 2 in die Matrize 7 und bugt den Einlegerüberschuss 6 an einem Tauchkantenspalt 5 um. In einem dritten Schritt wird die Kavität mit einem Spritzgussmaterial oder einem Schaumstoff aufgefüllt.

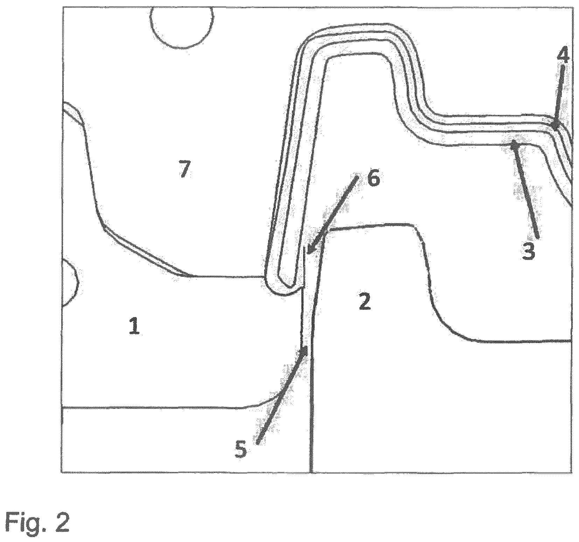

Die ankommende Kunststoffschmelzefront drückt den Einlegeteil 4 und den Einlegerüberschuss 6 an die entsprechenden Kavität-Außenwände und formt dadurch den Radius aus und der in Fig. 2 dargestellte 180° Umbug erzielt. Im Gegensatz zum Stand der Technik ragt der Einlegerüberschuss 6 nicht in den Tauchkantenspalt 5 und wird in dem Werkzeug umgebugt.

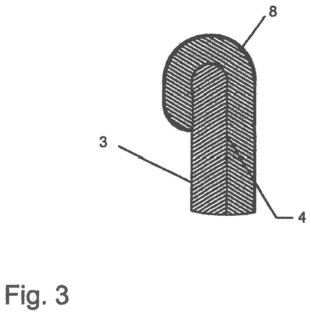

Wie aus Fig. 3 ersichtlich ist, schließt der umgebugte Einlegerüberschuss 6 des fertigen Formteils 3 bündig ab, sodass keine weitere Nachbearbeitung mehr erforderlich ist. Der Einleger 4 kann in dem dargestellten Beispiel beispielsweise eine Oberfläche 8 in Form einer Folie und einen daran anschließenden Körper aus Schaumstoff aufweisen.

Die Ausführungsbeispiele zeigen mögliche Ausführungsvarianten des erfindungsgemäßen Verfahrens bzw. des erfindungsgemäßen Formteils, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus eines verwendeten Spritzgusswerkzeuges dieses bzw. dessen Bestandteile teilweise nicht maßstäblich und/oder vergrößert und/oder verkleinert dargestellt wurden.

### Bezugszeichenaufstellung

- 1: Schieber
- 2: Formkern
- 3: Formteil (Bauteil)
- 4: Einlegeteil (Enleger)
- 5: Tauchkantenspalt

- 6: Kante (Einlegerüberschuss)
- 7: Matrize
- 8: Oberfläche des Einlegeteils

## Patentansprüche

1. Verfahren zum Herstellen eines Formteils (3) mittels eines Werkzeuges, welches eine Matrize (7) und einem Formkern (2) aufweist, wobei in einem ersten Schritt ein zu hinterspritzender oder hinterschäumender Einlegeteil (4) in die Matrize (7) eingelegt wird, sodass eine Kante (6) des Einlegeteils (4) über einen Rand eines matrizenseitigen Schiebers (1) übersteht, welcher eine Sichtkante des Einlegeteils (4) umrundet und den Einlegeteil (4) fixiert, wobei in einem zweiten Schritt das Werkzeug geschlossen und die überstehende Kante (6) von dem Formkern (2) in Richtung der Matrize (7) umgebogen wird, sodass zwischen dem Formkern (2) und der Matrize (7) eine Kavität gebildet wird, und wobei in einem dritten Schritt die Kavität mit einem Spritzgussmaterial oder einem Schaumstoff aufgefüllt wird.

2. Verfahren nach Anspruch 1, **dadurch gekennzeichnet, dass** in Schritt eins ein Einlegeteil (14) aus einem elastischen Material verwendet wird.

3. Verfahren nach Anspruch 1, **dadurch gekennzeichnet, dass** in Schritt eins ein Einlegeteil (14) aus einem plastischen Material verwendet wird.

## Claims

1. A method for producing a moulded part (3) by means of a tool which comprises a matrix (7) and a mould core (2), wherein in a first step an insert (4) to be back-moulded or back-foamed is placed into the matrix (7), so that an edge (6) of the insert (4) protrudes past a rim of a matrix-side slide (1), which slide (1) rounds a visible edge of the insert (4) and fixes the insert (4), wherein in a second step the tool is closed and the protruding edge (6) is bent in the direction of the matrix (7) by the mould core (2), so that a cavity is formed between the mould core (2) and the matrix (7), and wherein in a third step the cavity is filled with an injection-moulding material or a foam.

2. The method according to claim 1, **characterised in that** in step one an insert (14) from an elastic material is used.

3. The method according to claim 1, **characterised in that** in step one an insert (14) from a plastic material is used.

## Revendications

1. Procédé pour la fabrication d'une pièce moulée (3) au moyen d'un outil, lequel présente une matrice (7) et un noyau de moule (2), dans lequel, dans une première étape, une pièce d'insertion (4) à injecter par l'arrière ou à mousser par l'arrière est insérée dans la matrice (7) de sorte qu'une arête (6) de la pièce d'insertion (4) dépasse d'un bord d'un coulisseau (1) du côté de la matrice, qui fait le tour d'une arête visible de la pièce d'insertion (4) et fixe la pièce d'insertion (4), dans lequel dans une deuxième étape, l'outil est fermé et l'arête (6) qui dépasse est recourbée par le noyau de moule (2) en direction de la matrice (7), de sorte qu'une cavité soit formée entre le noyau de moule (2) et la matrice (7), et dans lequel dans une troisième étape, la cavité est remplie avec une matière de moulage par injection ou un produit alvéolaire.

2. Procédé selon la revendication 1, **caractérisé en ce qu'**à l'étape un, une pièce d'insertion (14) en une matière élastique est utilisée.

3. Procédé selon la revendication 1, **caractérisé en ce qu'**à l'étape un, une pièce d'insertion (14) en une matière plastique est utilisée.
